# EUROPÄISCHE PATENTANMELDUNG

(11) **EP 1 223 732 A2**
(43) Veröffentlichungstag der Anmeldung: **17.07.2002**
(21) Anmeldenummer: 01130516.6
(22) Anmeldetag: 21.12.2001
(51) Int. Cl.: H04M 3/38

(54) **Verfahren um Leistungsmerkmale nach der Authentisierung in einem Telekommunikationsnetzwerk bereitzustellen**

(30) Priorität: 04.01.2001 DE 10100224
(71) Anmelder: Eolon GmbH, 68167 Mannheim (DE)
(72) Erfinder: Fivzuk, Christian, 79395 Neuenburg (DE)
(74) Vertreter: Isenbruck, Günter, Dr.

(57) **Zusammenfassung**

Die Erfindung bezieht sich auf ein Verfahren zum Betreiben eines Netzwerkes für Telekommunikationsdienstleistungen zum Austausch derselben für Einzelteilnehmer (1 - 1.n) oder Sammelabnehmer (40) zum Austausch von Telekommunikationsdienstleistungen. Diese sind zentral von einer Kommunikationsplattform (4, 37) abrufbar, wobei die Anzahl von Telekommunikationsdienstleistungen ständig ausbaubar ist. Der Zugang zu den Telekommunikationsdienstleistungen bereitstellenden Kommunikationsplattformen (4, 37) erfolgt mittels eines Servicecodes, welcher den Teilnehmern (1 - 1.n, 22) identifiziert und die Vollständigkeit des Servicecodes den Zugriff des Teilnehmers (1 - 1.n) auf externe Zweigstationen (22) ermöglicht.

## Beschreibung

Die Erfindung bezieht sich auf ein Verfahren zum Betreiben eines Telekommunikationsnetzwerkes unter Abwicklung von Telekommunikationsdienstleistungen mehrerer Anbieter.

Es sind bereits Verfahren zur Abwicklung von vorausbezahlten Telekommunikationsdienstleistungen bekannt, bei denen Telefonkarten mit einem Chip ausgestattet sind. Auf diesem Chip ist der Gegenwert eines Geldbetrages gespeichert, mit dem die Telefonkarte zuvor aufgewertet worden ist. Der Geldbetrag liegt üblicherweise in einer Größenordnung zwischen DM 10,-- und DM 50,--. Am Ende eines jeden unter Einsatz der Telefonkarte durchgeführten Telefonats wird die für dieses Telefonat angefallene Gebühr ermittelt. Auf dem Chip der Geldkarte wird danach eine neue Zahl gespeichert, die dem bisherigen Wert abzüglich des Wertes für das geführte Telefongespräch entspricht. Überschreitet während der Dauer eines Telefongespräches der für die aktuelle Verbindung fällige Betrag den Restbetrag der Telefonkarte, wird das geführte Telefonat unterbrochen.

Das abrupte Ende eines unter Umständen wichtige Informationen austauschende Telefonates kann sehr nachteilig sein. Es sind daher ebenfalls voraus bezahlbare Telefonkarten bekannt, bei denen ebenfalls ein bestimmter Geldbetrag gegeben ist und bei denen ebenfalls abhängig von den Kosten eines aktuellen Gespräches abgerechnet wird. Ist der auf dem Chip solcher Telefonkarten gespeicherte Höchstbetrag aufgebraucht, ist es zwar unmöglich, von diesem Telefon aus zu telefonieren, jedoch können für eine bestimmte Zeitdauer noch Gespräche entgegen genommen werden. Im Vergleich zur erstgenannten Variante ist in der letztgenannten Lösung eine Abhilfemaßnahme in bezug verglichen mit dem abrupten Unterbrechen von Telefonaten zu sehen.

Angesichts des aufgezeigten Standes der Technik, liegt der Erfindung die Aufgabe zugrunde, ein Verfahren zum Betreiben eines Telekommunikationsnetzwerkes zu schaffen, welches unabhängig von aktuell verfügbaren Geldbeträgen auf Telefonkarten erfolgt und die Herstellung bzw. Aufrechterhaltung einer Telekommunikationsverbindung unabhängig von auf Karten gespeicherten Geldbeträgen gestaltet werden kann.

Erfindungsgemäß wird diese Aufgabe durch ein Verfahren zum Betreiben eines Netzwerkes für Telekommunikationsdienstleistungen gelöst, mit Einzelteilnehmern oder Sammelabnehmern zum Austausch von Telekommunikationsdienstleistungen, die zentral von einer Kommunikationsplattform abrufbar sind, die Anzahl der Telekommunikationsdienstleistungen ständig ausbaubar ist und der Zugang auf die die Telekommunikationsdienstleistungen bereitstellende Kommunikationsplattform mittels eines individuellen Service-Codes erfolgt, welcher den Teilnehmer oder den Sammelabnehmer identifiziert und dessen Vollständigkeit den Zugriff des Teilnehmers oder des Sammelabnehmers auf externe Netzwerkstationen ermöglicht.

Die mit dem erfindungsgemäßen Verfahren erzielbaren Vorteile sind vor allem darin zu erblicken, daß einerseits der Zugang auf die die Telekommunikationsdienstleistungen bereitstellende Kommunikationsplattform mittels eines Service-Codes erfolgen kann und der die Kommunikationsplattform anwählende Teilnehmer danach entscheiden kann, ob er die angebotenen Dienste in Anspruch nimmt oder nicht. Der Zugriff auf externe Netzwerkstationen ist erst dann möglich, wenn der die Kommunikationsplattform anwählende Teilnehmer seine individuelle Teilnehmercodierung übermittelt hat. Mittels dieses zweistufig erfolgenden Zugriffes auf eine Telekommunikationsdienstleistungen bereitstellende Plattform besteht neben der Möglichkeit, die angebotenen Telekommunikationsdienstleistungen lediglich entgegenzunehmen, die Möglichkeit für die Teilnehmer, nach Durchlauf einer einer Angebotsroutine nachgeschalteten Auswahl- bzw. Bestätigungsroutine direkt auf die per Auswahl mit der Kommunikationsplattform verbundenen externen Servicestationen in Verbindung zu treten.

In weiterer vorteilhafter Ausgestaltung des der Erfindung zugrundeliegenden Gedankens erfolgt nach dem Zugriff des Teilnehmers auf die Kommunikationsplattform, die bevorzugt als Audiotextplattform beschaffen ist, ein Weiterschalten des Teilnehmers an ein Board und das Durchlaufen einer an die Kommunikationsplattform anwählenden Teilnehmer gerichteten Angebotsroutine, wobei den angebotenen Telekommunikationsdienstleistungen entsprechend Auswahlcodes übermittelt werden.

Durch die Weiterschaltung des die Kommunikationsplattform für Telekommunikationsdienstleistungen anwählenden Teilnehmers an ein Weiterschaltungsboard kann dem Teilnehmer die ganze Angebotspalette an Telekommunikationsdienstleistungen in kurzer Zeit nahegebracht werden.

Macht der Teilnehmer durch Bestätigung eines der angebotenen Auswahlcodes innerhalb einer Bestätigungsrückmeldung Gebrauch von einem der angebotenen Telekommunikationsdienstleistungen, erfolgt seine Weiterschaltung an eine individuelle teilnehmerspezifische Datensätze generierende Kenngrößenverarbeitung. Auch in diesem Stadium hat der die Kommunikationsplattform mittels eines Servicecodes ansprechende Teilnehmer die Möglichkeit, das Angebot wahrzunehmen, d.h. durch Eingabe seiner Telefonnummer oder seiner vollständigen Anschrift; andererseits steht ihm die Möglichkeit offen, zu diesem Zeitpunkt vor komplettem Durchlaufen der Bestätigungsrückmeldung den Zugriff auf die die Telekommunikationsdienstleistungen bereitstellende Kommunikationsplattform abzubrechen.

Als innerhalb der Kenngrößenverarbeitung können simultan Datensätze der Teilnehmer in Speicherblöcken angelegt werden, die beispielsweise aus der vollständigen Adresse des die als Audiotextplattform beschaffene Kommunikationsplattform anwählenden Teilnehmers generiert werden. Somit generiert jeder Teilnehmer seinen eigenen Schlüssel zum Zugriff auf die auf der Kommunikationsplattform gespeicherten Telekommunikationsdienstleistungen selbstbestimmt und freiwillig. Um den Zugriff auf die Telekommunikationsdienstleistungen zu erleichtern, erfolgt die Generierung eines teilnehmerspezifischen Datensatzes, bestehend beispielsweise aus der vollständigen Adresse des Teilnehmers sowie seiner Rufnummer und anderer freiwillig abzugebender Daten beim Erstzugriff auf die Kommunikationsplattform. Bei erneutem Zugriff auf die Kommunikationsplattform mittels eines Servicecodes unterbleibt die erneute Eingabe; der als bereits vorhandener Teilnehmer bekannte Teilnehmer kann unmittelbar auf die bereitgestellten Telekommunikationsdienstleistungen zugreifen mit bzw. den über die . Kommunikationsplattform ansprechbaren externen Netzwerkstationen verbunden werden. Zur Erstellung eines Teilnehmerprofiles kann die Anzahl der jeweiligen Zugriffe des

Teilnehmers auf die Kommunikationsplattform, d.h. eine Audiotextplattform, gespeichert werden.

Die Datensätze, welche die einzelnen auf die Kommunikationsplattform zugreifenden Teilnehmer identifizieren, können innerhalb eines internen Kenngrößenabgleiches oder durch eine extern erfolgende Kenngrößenabgleichung verglichen werden.

Nach Durchlauf der vom Weiterschaltungsboard zur Verfügung gestellten Auswahlroutine samt Übermittlung der Auswahlcodes für die bereitgestellten Telekommunikationsdienstleistungen und Durchlaufen der Bestätigungsrückmeldung wird der Zugriff des die Kommunikationsplattform anwählenden Teilnehmers auf externe Netzwerkstationen freigegeben. Dies hat den Vorteil, dass der Teilnehmer, der mit den externen Netzwerkstationen in Verbindung tritt, identifiziert ist und die abzurufende Leistung anhand der innerhalb der Ausfallroutine übermittelten Auswahlcodes eindeutig identifiziert ist.

Zur leichteren Handhabung der durch den Zugriff auf die bereitgestellten Telekommunikationsdienstleistungen verursachten Abrechnungsmodalitäten erfolgt nach Durchlauf von Ausfallroutine und Bestätigungsrückmeldung an die Kenngrößenverarbeitung der Zugriff des Teilnehmers sowohl auf eine externe Netzwerkstation als auch parallel dazu auf eine Abrechnungsroutine.

Neben dem Zugriff durch Einzelteilnehmer auf externe, über die Kommunikationsplattform ansprechbare Netzwerkstationen, lässt sich auch ein eingangsseitiger Zugriff auf die Kommunikationsplattform durch externe Netzwerkstationen realisieren, um an einzelne Teilnehmer gerichtete, mit teilnehmerspezifischen Informationen versehene Botschaften zu übermitteln. Auf diese Weise wird das vorgeschlagene System zum Betreiben eines Telekommunikationsnetzwerkes zu einem bidirektionalen System, bei dem einzelne Netzwerkstationen mit Einzel-Teilnehmern Richtungen miteinander zu kommunizieren vermögen. Sie treten sowohl als Sender als auch als Empfänger von Nachrichten auf.

Aus dem vom Einzelteilnehmer noch unvollständig übermittelten Servicecode werden unter Heranziehung der teilnehmerspezifisch generierten Datensätze in der

Kenngrößenverarbeitung komplette Identifikationscodes des Teilnehmers generiert und dauerhaft abgespeichert, um nachfolgende Zugriffe identischer Einzelteilnehmer auf die Kommunikationsplattform zu erleichtern. Mit dieser Maßnahme kann der Berechnungsaufwand eines innerhalb eines Telekommunikationsdienstleistungen zur Verfügung stellenden Telekommunikationsnetzwerkes erheblich herabgesetzt werden.

Innerhalb der Kenngrößenverarbeitung kann festgestellt werden, ob der Zugriff auf die Kommunikationsplattform begehrende Teilnehmer bereits über einen vorhandenen Datensatz, d.h. einen vollständigen Servicecode verfügt, oder ob dieser zunächst noch generiert werden muss. Die Generierung eines vollständigen, einen Einzelteilnehmer identifizierenden Identifikationscodes kann in einer externen Bearbeitungsschleife erfolgen, so dass in der Kenngrößenverarbeitung genügend Kapazitäten verbleiben, um die Zugriffe bereits identifizierter Teilnehmer auf die bereitgestellten Telekommunikationsdienstleistungen in kürzester Zeit abzuwickeln. Neben Einzelteilnehmern, die als Nachfrager für Telekommunikationsdienstleistungen auftreten, können Sammelabnehmer ein Kontingent von noch mit Teilnehmern zu belegenden, d.h. separat zu identifizierenden Datensätzen in der Kenngrößenverarbeitung reservieren, wobei diese als Sammelabnehmer auf die Kommunikationsplattform zugreifenden Teilnehmer die einzelnen, die Kontingente auffüllenden Teilnehmer in Direktabwicklung zur Verfügung stellen.

Anhand der Zeichnung wird die Erfindung nachstehend näher erläutert.

Es zeigt:
- Figur 1: ein Netzwerk zum Austausch von Telekommunikationsdienstleistungen mit Datensätzen über eine Kommunikationsplattform für Einzelteilnehmer und
- Figur 2: ein Netzwerk zum Austausch von Datensätzen für eine Kommunikationsplattform für Sammelabnehmer.

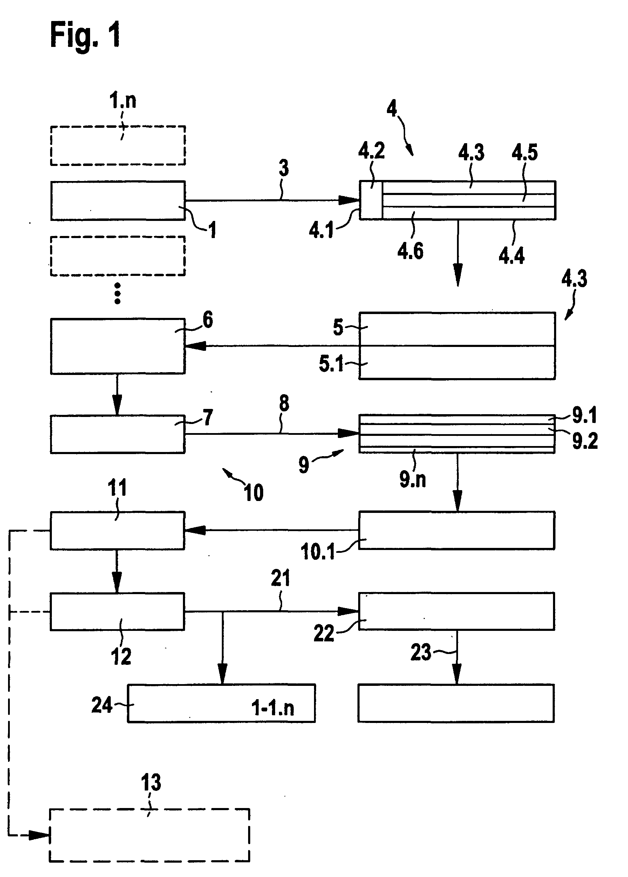

Aus der Darstellung gemäß Figur 1 geht grob schematisiert ein Netzwerk zum Austausch von Telekommunikationsdienstleistungen über Datensätze über eine Kommunikationsplattform für Einzelteilnehmer näher hervor.

Wenn im nachfolgenden von Einzelteilnehmern 1 - 1.n die Rede ist, so sind damit Einzelindividuen gemeint, die gleichzeitig oder in kurz aufeinanderfolgenden Zeitintervallen auf die zur Verfügung gestellten Telekommunikationsdienstleistungen der Kommunikationsplattform, beispielsweise einer Audiotextplattform, zugreifen wollen.

Über eine als bidirektionale Datenübertragungsleitung 3 fungierende Leitung treten die Einzelteilnehmer 1 - 1.n beispielsweise über ein Mobiltelefon an der Eingangsseite 4.1 einer Kommunikationsplattform 4 als nachfragende Interessenten für Telekommunikationsdienstleistungen auf. Die Kommunikationsplattform 4, die hier lediglich grob schematisch wiedergegeben ist, ist vorzugsweise als eine Audiotextplattform ausgebildet. Sie kann beispielsweise eine mittels eines Menüs 4.2 geführte Steuerung enthalten sowie einen Wiedergabespeicher 4.3, eine Zugangscodeabprüfungsstufe 4.5 sowie eine Identifikationsroutine 4.6. An der Ausgangsseite 4.4 steht die Kommunikationsplattform 4 in Verbindung mit einem Weiterschaltungsboard 5, auf dem die bereitgestellten Telekommunikationsdienstleistungen in Verbindung mit einem Auswahlcode 5.1 beispielsweise einer Tastenfeldbelegung an den Teilnehmer 1 bis 1.n zurückgemeldet werden. Im Rahmen einer Auswahlroutine 6 hat der nach Telekommunikationsdienstleistungen nachfragende Teilnehmer die Möglichkeit, entsprechend der angebotenen Auswahlroutine 6 mittels des übermittelten Auswahlcodes 5.1 einzelne Telekommunikationsdienstleistungen, die er jeweils in Anspruch nehmen möchte, auszuwählen.

Als Ergebnis der Bestätigungsabfrage beim Teilnehmer 1 bis 1.n wird eine Bestätigungsrückmeldung 8 an eine Kenngrößenverarbeitung 9 zurückgemeldet. Dort werden auf Basis der Bestätigungsrückmeldung 8 des Teilnehmers 1 - 1.n die Systemcodes in einem ersten Speicherblock 9.2 sowie einem zweiten Speicherblock 9.2 sowie gegebenenfalls weiteren Speicherblöcken 9 - 9.n um teilnehmerspezifische Datensätze ergänzt. Diese Ergänzung der teilnehmerspezifischen Datensätze, die unter der den vom Teilnehmer 1 - 1.n gewählten Systemcode abgespeichert und verwaltet werden, sind beispielsweise ein Zugangscode sowie eine persönliche, teilnehmerspezifische Identifikationsnummer. In den Datensätze 9.1 - 9.n können ferner die komplette Anschrift und Adresse des Teilnehmers 1 - 1.n sowie die angegebene telefonische Rufnummer abgelegt werden.

Die Generierung dieser teilnehmerspezifischen Datensätze erfolgt einmalig bei Aktivierung der Kenngrößenverarbeitung durch die vom Teilnehmer zurückgemeldete Betätigungsrückmeldung 8 und wird nach einer einmaligen Anlegen im Rahmen der Kenngrößenverarbeitung 9 nicht mehr gesondert abgefragt. Die in den Datensätzen 9.1 - 9.n abgelegten teilnehmerspezifischen Größen werden mittels einer an den Teilnehmer 1 bis 1.n zurückgemeldeten persönlichen Systemcode verschlüsselt, so dass bei erneuter Anwahl der Kommunikationsplattform 4 durch einen bereits identifizierten und in der Vergangenheit nachfragenden Teilnehmer 1 - 1.n keine redundanten Datensätze 9.1 - 9.n im Rahmen der Kenngrößenverarbeitung 9 angelegt werden.

Nach Anlage der teilnehmerspezifischen den Systemcode ergänzenden Datensätzen 9.1 - 9.n erfolgt eine Rückmeldung an den Teilnehmer zur Wiederholung der Eingabe und der Aufnahme einer gegebenenfalls erforderlichen Korrektur.

Nach Abschluss der Korrekturabfrage 10.1 erfolgt im Rahmen eines Kenngrößenabgleiches 11 die Freischaltung des nunmehr anhand der dem Systemcode teilnehmerspezifisch zugeordneten Datensätze 9.1 - 9.n bei einer Aktivierung einer Prüfroutine 12. Innerhalb der Prüfroutine werden mittels Zugriffe zu extern vorgehaltenen Datenbanken die vom Teilnehmer übermittelten Daten auf Plausibilität abgeprüft. Die Prüfroutine 12 kann entweder intern, d.h. innerhalb des Telekommunikationsnetzwerkes erfolgen (vergleiche gestrichelte Darstellung in Figur 1); die Prüfroutine zur Überprüfung der durch den Teilnehmer 1 - 1.n übermittelten Daten aufgrund teilnehmerspezifischer Datensätze 9.1 - 9.n im Rahmen der Kenngrößenverarbeitung kann auch in einer extern vorgehaltenen Prüfroutine 13 vorgenommen werden.

Sind die Daten, welche vom Teilnehmer 1 bis 1.n zur Generierung der teilnehmerspezifischen Datensätze 9.1 - 9.n im Rahmen der Kenngrößenverarbeitung genannt worden sind auf Plausibilität untersucht, erfolgt eine Freischaltung einer Auftragserteilung 21 je nach mittels Ausfallcode 5.1 ausgewählte Telekommunikationsdienstleistung. Die Auftragserteilung 21 erfolgt dergestalt, dass sowohl an eine zur Abrechnung der nachgefragten Telekommunikationsdienstleistungen dienenden Abrechnungsroutine 24 für die nach Telekommunikationsdienstleistungen nachfragenden Teilnehmern 1 - 1.n verzweigt wird, als auch zu einer externen vorgehaltenen Netzwerkstation 22. Von dieser kann hier symbolisch durch einen Pfeil eine Leistung an den Teilnehmer 1 - 1.n erbracht werden, für die ein entsprechendes Entgelt fällig wird. Das fällige Entgelt wird im Rahmen der bereits erwähnten Abrechnungsroutine 24 vom nunmehr durch die zum Systemcode zugehörige, teilnehmerspezifischen Datensätze 9.1 - 9.n eindeutig identifizierten Teilnehmer erhoben.

In einer Ausführungsvariante des erfindungsgemäß vorgeschlagenen Verfahrens zum Betreiben einer Kommunikationsplattform 4 für Telekommunikationsdienstleistungen sind die Teilnehmer 1 bis 1.n sowie die externen Netzwerkstationen 22 austauschbar. Es lässt sich durchaus auch implementieren, dass eine externe Netzwerkstation 22 als Nachfrager nach Telekommunikationsdienstleistungen an der Eingangsseite 4.2 der Kommunikationsplattform 4 anklopft, um dort an bestimmte Teilnehmerkreise 1 - 1.n, deren Nachfrageprofil nach Telekommunikationsdienstleistungen in der Kenngrößenverarbeitung 9 teilnehmerspezifisch durch eindeutig zuordenbare Datensätze 9.1 - 9.n abgelegt ist, übermittelt werden können. Damit kann ein externer Lieferant von Telekommunikationsdienstleistungen (externe Netzwerkstation 22) Nachrichten teilnehmerspezifisch an die Teilnehmer 1 bis 1.n, die an der Kommunikationsplattform 4 nach Telekommunikationsdienstleistungen nachfragen, versandt werden. Der Teilnehmer 1 - 1.n kann sich über die von einem Service-Nummeranbieter 30 erhaltene Servicenummer Zugang zur Kommunikationsplattform 4 verschaffen auf der ein Auswahlmenü 4.2 implementiert ist. Dem Teilnehmer wird bei Einwahl in das Servicemenü 4.2 auf der Kommunikationsplattform 4 mitgeteilt, dass kostenpflichtige Telekommunikationsdienstleistungen angeboten werden. Er kann die per Auswahlcode 5.1 angebotenen Telekommunikationsdienstleistungen per Bestätigungsrückmeldung 8 quittieren. Bestätigt der Teilnehmer 1 - 1.n zum Beispiel über die Rückmeldung 8 die Abnahme einer kostenpflichtigen Telekommunikationsdienstleistung, wird diese Transaktion anhand der generierten Datensätze 9.1 - 9.n dem Teilnehmer 1 - 1.n spezifisch zugeordnet, kann die Inanspruchnahme der Telekommunikationsdienstleistung später mittels der Abrechnungsroutine 24 seiner Telefonrechnung z.B. belastet werden, auf der der Betrag +Rechnung gestellt werden kann.

Anstelle der Rückmeldung 8 eines Auswahlcodes 5.1 für die von der Kommunikationsplattform angebotene Telekommunikationsdienstleistung kann der Teilnehmer 1 - 1.n zum Beispiel über die Tastatur eines Mobiltelefons 2 eine eine Dienstleistung oder eine Ware identifizierende Artikelnummer eingeben und den Versand eines der Artikel-Nummer entsprechenden Ware oder Dienstleistung durch Auftragserteilung 21 an einen externen Dienstleister auslösen. Auch der für die Erbringung der externen Dienstleistung bzw. Lieferung von Ware anfallende Betrag kann der Telefonrechnung des Teilnehmers 1 - 1.n belastet werden, da dieser anhand der Datensätze 9 - 9.n eindeutig identifizierbar ist. Die Abrechnungsroutine 24 kann von der Telekommunikationsgesellschaft durchgeführt werden, die auch die Servicenummern zur Einwahl der Teilnehmer 1.1 - 1.n in das Auswahlmenü 4.2 der Kommunikationsplattform 4 zur Verfügung stellt.

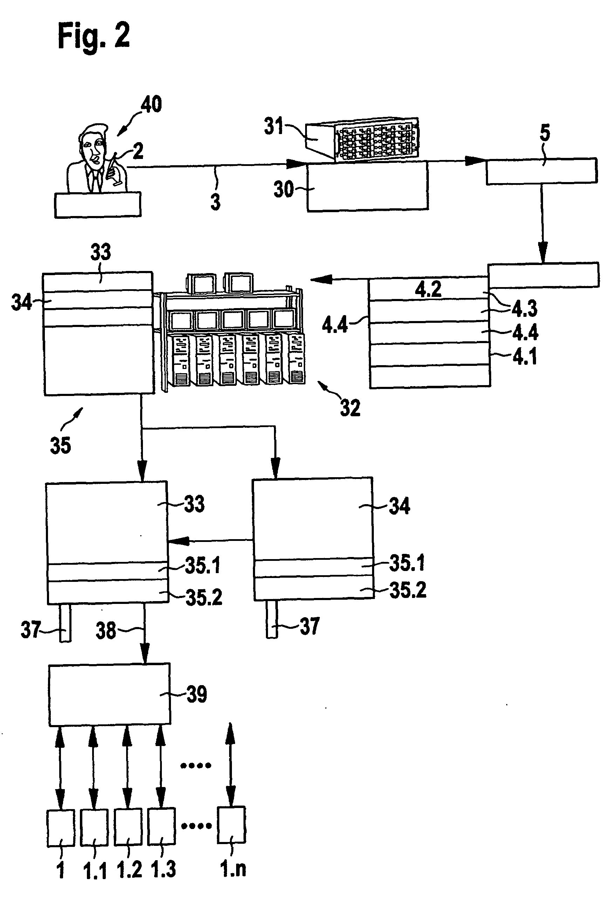

Aus der Darstellung gemäß Figur 2 geht ein Netzwerk zum Austausch von Telekommunikationsdienstleistungen durch Datensätze über eine Kommunikationsplattform für einen Sammelabnehmer näher hervor.

Ein Sammelabnehmer 40, identifiziert durch eine durch die Darstellung einer Person gemäß Figur 2, fragt beispielsweise über eine mobile Telekommunikationseinrichtung wie ein Mobiltelefon 3 über eine bidirektionale Datenleitung 3 an, ob ein Speicherrack 31 eines Servicenummeranbieters 30 ein Kontingent von Datensätze reservieren kann. Die Reservierung des nachgefragten Kontingentes von Datensätzen erfolgt in einer Kommunikationsplattform 4, welcher an der Eingangsseite 4.1 eine menügeführte Abfrage 4.2 enthalten kann. Im Rahmen der Kommunikationsplattform können Wiedergabespeicher für Audioinformation 4.3 vorgesehen sein sowie eine Routine zur Abprüfung eines Zugangscodes 4.5 sowie eine Identifikationsroutine 4.6. Ausgangsseitig (Bezugszeichen 4.4) steht die Kommunikationsplattform 4 mit einem Routing-System 32 in Verbindung, über welches abgeprüft werden kann, ob der jeweils als Sammelabnehmer 40 auftretende Teilnehmer am Telekommunikationsdienstleistungsnetzwerk ein bereits bekannter Teilnehmer ist, über den bereits ein Datensatz 33 erstellt worden ist. Wird dies bejaht, kann das vom Sammelabnehmer 40 nachgefragte Kontingent an Datensätzen, Speicher für teilnehmerspezifische Zugangscodes bzw. zur teilnehmerspezifischen Identifikation 35.2 enthaltend, für diesen reserviert werden. Im Rahmen einer Kontingentrückmeldung 38 an den Sammelabnehmer 40 kann dieser im Rahmen einer Direktabwicklung 39 die zur Verfügung gestellten Datensätze 35.1 - 35.2 im Rahmen einer Direktabwicklung an bei diesen nachfragende Teilnehmer 1 - 1.n, welche nach Telekommunikationsdienstleistungen nachfragen, vergeben.

Liegt hingegen kein bereits identifizierter nach Telekommunikationsdienstleistungen nachfragender Sammelabnehmer 40 vor, kann im Rahmen einer externen Routine ein neuer Datensatz 34 für diesen angelegt werden. Der neu angelegte Datensatz, beispielsweise im Rahmen der Kerngrößenverarbeitung 9 (vergleiche Darstellung gemäß Figur 1) angelegt, kann dann an eine Kommunikationsplattform 37 - hier nicht näher dargestellt - jedoch im Prinzip der Kommunikationsplattform 4 entsprechend - freigeschaltet werden. Auch dieser neue Sammelabnehmer 40 von Telekommunikationsdienstleistungen kann nunmehr im Rahmen einer Direktabwicklung 39, 40 die von ihm reservierten Datensatzkontingente an einzelne bei ihm direkt nachfragende Teilnehmer 1 - 1.n, welche nach Zugriff auf Telekommunikationsdienstleistungen nachfragen, gegen Entgelt zur Verfügung stellen.

Gemäß den in den Figuren 1 bzw. 2 wiedergegebenen Telekommunikationsdienstleistungsnetzwerken lassen sich sowohl als Einzelteilnehmer 1 - n als auch als Sammelabnehmer 40 auftretende Nachfrager nach Telekommunikationsdienstleistungen bedienen. Der Zugriff auf einzelne, explizit angebotene Telekommunikationsdienstleistungen kann sowohl durch eine mehrfach gestufte Filterung von Auswahl und Bestätigungsroutinen mit dem einzelnen, nach Telekommunikationsdienstleistungen nachfragenden Teilnehmer 1 - 1.n durchgeführt werden, als auch mit Sammelabnehmern 40, die ganze Blöcke von zur Verfügung stehenden, teilnehmerspezifisch zu belegenden Datensätze für sich reservieren. Die Sammelabnehmer 40 können beispielsweise zur Bindung von Kunden, die reservierten Datensatzspeicherblöcke, in denen teilnehmerspezifische Zugangsnummern sowie persönliche Identifikationsnummern gespeichert werden können, im Rahmen einer Direktabwicklung 39 direkt einzelnen, bei den Sammelabnehmern 40 direkt nach Telekommunikationsdienstleistungen nachfragenden Teilnehmern 1 - 1.n belegt und verwaltet werden. Dem Sammelabnehmer 40 steht nunmehr die Möglichkeit offen, bei ihm direkt nachfragenden Teilnehmern Nachfragern 1 - 1.n von Telekommunikationsdienstleistungen eine direkte und schnellen Zugriff auf die Kommunikationsplattform 4 bzw. 37 und der auf dieser bereitgestellten Telekommunikationsdienstleistung zu verschaffen. Ferner kann durch eine Parallelschaltung (vergleiche Darstellung in Figur 1, Abrechnungsroutine 24) eine Direkt-Abrechnungsmodalität gewährleistet werden.

Zum Zugriff auf an einer Kommunikationsplattform 4 bereitgestellten Telekommunikationsdienstleistungen eignet sich sowohl ein mit einer bestimmten Servicecodevorwahl versehener Telefonanruf über ein Mobiltelefon oder aus dem Festnetz sowie eine Adressierung einer vorzugsweise als Audiotextplattform beschaffene Kommunikationsplattform 4 bzw. 37 via Internet. In analoger Weise wie bereits in Zusammenhang mit Figur 1 geschildert, können die Teilnehmer 1 - 1.n, die sich als Teil eines Mobiltelefons oder via PC über das Internet an eine Kommunikationsplattform 4 mittels eines von einem Servicenummeranbieter zur Verfügung gestellten Servicecodes (0900.......) Zugang verschafft haben nach Hinweis auf die Abnahme einer kostenpflichtigen Dienstleistung Waren und Dienstleistungen über die Kommunikationsplattform ordern bzw. die Lieferung von Waren auslösen. Die zur Verfügung gestellten Servicecodes (0900...) können blockweise tarifiert sein, wobei unterschiedliche Blöcke von Service-Codes auch mit unterschiedlichen Tarifen belegt sein können, je nach Kontingentgröße, Kunde ... . Der Gegenwert der jeweils in Anspruch genommenen Telekommunikationsdienstleistung bzw. der gelieferten Ware wird dem Teilnehmer 1 - 1.n, der anhand der Teilnehmer spezifisch generierten Datensätze 9.1 - 9.n eindeutig identifiziert ist, im Rahmen seiner Telefonrechnung belastet.

Neben einer Abfrage der an der Kommunikationsplattform 4 bzw. 37 bereitgestellten Telekommunikationsdienstleistungen ist bei beiden Verfahren sowohl für Einzelteilnehmer 1 - 1.n als auch für Sammelabnehmer 40 gewährleistet, dass diese nach einer Auswahlroutine durch eine selbst initiierte Bestätigungsroutine sich einen Zugriff auf die angebotenen Telekommunikationsdienstleistungen nach freiem Entschluss aneignen können.

### Bezugszeichenliste

- 1 - 1.n: Einzelteilnehmer
- 2: Mobiltelefon, PC
- 3: Bidirektionale Kommunikationsleitung
- 4: Kommunikationsplattform
- 4.1: Eingangsseite
- 4.2: Menü
- 4.3: Wiedergabespeicher
- 4.4: Ausgangsseite
- 4.5: Zugangscode Abprüfung
- 4.6: Identifikationsroutine
- 5: Weiterverarbeitungsboard
- 5.1: Auswahlcode
- 6: Auswahlroutine
- 7: Bestätigung
- 8: Bestätigungsrückmeldung
- 9: Kenngrößenverarbeitung
- 9.1: Erster Speicherblock
- 9.2: Zweiter Speicherblock
- 9.n: n-ter Speicherblock
- 10: Bestätigungsroutine
- 10.1: Korrekturabfrage
- 11: Kenngrößenabgleich
- 12: Prüfroutine (intern)
- 19: Prüfroutine (extern)
- 20: Datenübermittlung
- 21: Auftragserteilung
- 22: Netzwerkstation
- 23: Leistung
- 24: Abrechnungsroutine (Teilnehmer 1 - 1.n)
- 30: Service-Nummern-Anbieter
- 31: Speicher-Rack
- 32: Routing-System (Datenbankabgleich)
- 33: Vorhandener Datensatz
- 34: neu angelegter Datensatz
- 35: Erfassungsschleife
- 35.1: Zugangscodespeicher
- 35.2: Identifikationsvergaberoutine
- 36: Zugangsplattform
- 37: Kommunikationsplattform
- 38: Kontingentrückmeldung
- 39: Direktabwicklung
- 40: Sammelabnehmer

## Patentansprüche

1. Verfahren zum Betreiben eines Netzwerkes für Einzelteilnehmer (1 - 1.n) und Sammelabnehmer (40) von Telekommunikationsdienstleistungen zum Austausch von Telekommunikationsdienstleistungen, die zentral von einer Kommunikationsplattform (4, 37) abrufbar sind, wobei die Anzahl von Telekommunikationsdienstleistungen stetig ausbaubar ist, **dadurch gekennzeichnet, dass** der Zugang auf die Telekommunikationsdienstleistung bereitstellende Kommunikationsplattform (4, 37) mittels eines Servicecodes erfolgt, welcher den Teilnehmer (1 - 1.n, 40) identifiziert und dessen Vollständigkeit dem Zugriff des Teilnehmers (1 - 1.n, 40) auf externen Netzwerkstationen (22) ermöglicht.

2. Verfahren gemäß Anspruch 1, **dadurch gekennzeichnet, dass** nach Zugriff auf die Kommunikationsplattform (4) ein Weiterschalten an ein Board (5) erfolgt, und eine an dem Teilnehmer (1 - 1.n) gerichtete Auswahlroutine mit Auswahlcodes (5.1) durchlaufen wird.

3. Verfahren gemäß Anspruch 2, **dadurch gekennzeichnet, dass** der Teilnehmer (1 - 1.n) durch den Auswahlcode (5.1) mittels einer Bestätigungsrückmeldung (8) mit einer teilnehmerspezifische Datensätze generierenden Kenngrößenverarbeitung (9) verbunden wird.

4. Verfahren gemäß Anspruch 3, **dadurch gekennzeichnet, dass** die Datensätze von Teilnehmern (1 - 1.n) in Speicherblöcken (9.1 - 9.n) der Kenngrößenverarbeitung (9) angelegt werden.

5. Verfahren gemäß Anspruch 3, **dadurch gekennzeichnet, dass** die Datensätze die vollständige Adresse des Teilnehmers (1 - 1.n, 40) sowie seine Rufnummer enthalten.

6. Verfahren gemäß Anspruch 1, **dadurch gekennzeichnet, dass** die Anzahl der Zugriffe des Teilnehmers (1 - 1.n, 40) auf die Kommunikationsplattform (4, 37) gespeichert werden.

7. Verfahren gemäß Anspruch 4, **dadurch gekennzeichnet, dass** die Datensätze von Teilnehmern (1 - 1.n) im Rahmen eines internen Kenngrößenvergleiches (11, 12) oder eines externen Kenngrößenvergleiches (13) abgeglichen werden.

8. Verfahren gemäß einem oder mehrere der vorhergehenden Ansprüche, **dadurch gekennzeichnet, dass** nach Durchlaufen von Auswahlroutine (6) und Bestätigungsrückmeldung (8) der Zugriff des Teilnehmers (1 - 1.n) auf externe Netzwerkstationen (22) freigegeben wird.

9. Verfahren gemäß einem oder mehrere der vorhergehenden Ansprüche, **dadurch gekennzeichnet, dass** nach Durchlaufen von Auswahlroutine (6) und Bestätigungsrückmeldung (7) der Zugriff des Teilnehmers (1 - 1.n) auf eine Abrechnungsroutine (24) freigegeben wird.

10. Verfahren gemäß Anspruch 1, **dadurch gekennzeichnet, dass** die externe Netzwerkstation (22) eingangsseitig auf die Kommunikationsplattform (4, 37) zugreifen, die an die Teilnehmer (1 - 1.n) gerichtete, teilnehmerspezifische Informationen generiert.

11. Verfahren gemäß Anspruch 1, **dadurch gekennzeichnet, dass** aus dem Servicecode unter Heranziehung der teilnehmerspezifisch ermittelten Datensätze der Kenngrößenverarbeitung (9) eine Identifikation des Teilnehmers (1 - 1.n) generiert und abgespeichert wird.

12. Verfahren gemäß Anspruch 1, **dadurch gekennzeichnet, dass** ein vorhandener Datensatz (33) eines Teilnehmers (1 - 1.n) direkt auf die Kommunikationsplattform (4, 37) zugreift.

13. Verfahren gemäß Anspruch 1, **dadurch gekennzeichnet, dass** ein Datensatz (34) eines neuen Teilnehmers (1 - 1.n) in einer Erfassungsschleife Zugangscode (35.1) und Identifikationscode (35.2) mitgeteilt wird.

14. Verfahren gemäß Anspruch 1, **dadurch gekennzeichnet, dass** ein Sammelabnehmer (40) ein Kontingent von Teilnehmern (1 - 1.n) identifizierenden, noch zu belegenden Datensatz in Speicherräumen (35.1, 35.2) reserviert, die der Sammelabnehmer (40) einzelnen Teilnehmern (1 - 1.n) in Direktabwicklung (39) zur Verfügung stellt.
